# EUROPEAN PATENT APPLICATION

(11) **EP 2 685 375 A1**
(43) Date of publication of application: **15.01.2014**
(21) Application number: 13151088.5
(22) Date of filing: 11.01.2013
(51) Int. Cl.: G06F 9/445, G06F 21/62, G06F 3/0488

(54) **Information processing terminal and information processing method for remote controlling an external device from the lock screen**

(30) Priority: 10.07.2012 JP 2012154938
(71) Applicant: Kabushiki Kaisha Toshiba, Tokyo 105-8001 (JP)
(72) Inventor: Miyazawa, Akira, Tokyo, 105-8001 (JP)
(74) Representative: Henkel, Breuer & Partner

(57) **Abstract**

According to one embodiment, an information processing terminal includes a memory unit (210), a detector (201a), and an initiation controller (201c). The memory unit (210) is configured to store an application for controlling external device. The detector (201a) is configured to detect a trigger provided by a user to initiate the application. The initiation controller (201c) is configured to initiate the application for controlling the external device based on the trigger without clearing a lock function.

## Description

Embodiments described herein relate generally to an information processing terminal and an information processing method for initiating an application.

A tablet terminal can perform various operations by initiation of corresponding applications (this also applies to a smartphone). For example, the tablet terminal can hold and initiate applications which can control external devices such as a television.

To handle a desired application, a user needs to perform an operation of powering the tablet terminal on, clearing a lock function (a key lock function or a screen lock function) of the tablet terminal, and then selecting and initiating the desired application.

However, even if the user simply attempts to control an external device (for example, a television) using the tablet terminal, the user needs to carry out two steps of selecting an application and initiating the selected application. This is cumbersome.

An object of the present invention is to provide an information processing terminal and an information processing method which improve the convenience of the user.

A general architecture that implements the various features of the embodiments will now be described with reference to the drawings. The drawings and the associated descriptions are provided to illustrate the embodiments and not to limit the scope of the invention.
FIG. 1 is an exemplary diagram showing a configuration of a system including an information processing terminal according to an embodiment.
FIG. 2 is an exemplary block diagram showing a configuration of the information processing terminal according to the embodiment.
FIG. 3 is an exemplary diagram showing a screen of the information processing terminal according to the embodiment.
FIG. 4 is an exemplary flowchart of a process of initiating an application on the information processing terminal according to the embodiment.
FIG. 5 is an exemplary diagram showing a configuration of a system including the information processing terminal according to the embodiment.
FIG. 6 is an exemplary diagram showing a screen of the information processing terminal according to the embodiment.
FIG. 7 is an exemplary diagram showing a screen of the information processing terminal according to the embodiment.

Various embodiments will be described hereinafter with reference to the accompanying drawings.

In general, according to one embodiment, an information processing terminal includes a memory unit, a detector, and an initiation controller. The memory unit is configured to store an application for controlling external device. The detector is configured to detect a trigger provided by a user to initiate the application. The initiation controller is configured to initiate the application for controlling the external device based on the trigger without clearing a lock function.

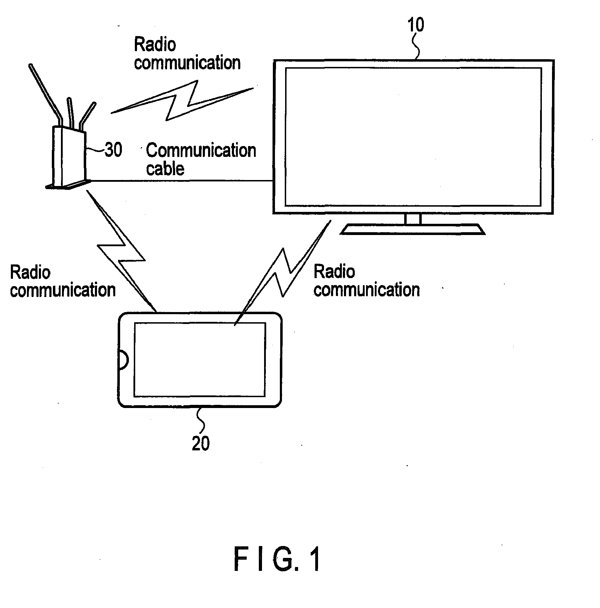

FIG. 1 shows an example of a system comprising a plurality of electronic apparatuses. The system comprises, for example, a video display 10, an information processing terminal 20, and a radio communication apparatus 30.

The video display 10 is, for example, an electronic device having a function to display videos of broadcasting signals or videos stored in a storage medium. Furthermore, the video display 10 has a function to communicate with an information processing terminal 20 and a radio communication apparatus 30. The video display 10 is, for example, a television, but the embodiment is not limited to the television.

The information processing terminal 20 is an electronic apparatus having a function to initiate an application to control (operate) a corresponding external device. Furthermore, the information processing terminal 20 has a function to communicate with the video display 10 and the radio communication apparatus 30. A configuration of the information processing terminal 20 will be described below. A portable terminal 200 is, for example, a tablet terminal or a smartphone, but the embodiment is not limited to this.

The radio communication apparatus 30 is an electronic apparatus having a function to communicate with the video display 10 and the information processing terminal 20. The radio communication apparatus 30 communicate with the video display 10 by radio or via a communication cable such as a LAN cable. The radio communication apparatus 30 communicates with the information terminal 20 by radio. Furthermore, the radio communication apparatus 30 has a function to form a subnet (in which electronic devices can be controlled each other) by using a subnet mask to assign IP addresses to electronic apparatuses. That is, the radio communication apparatus 30 has a DHCP (Dynamic Host Configuration Protocol) server function. According to the present embodiment, at least the video display 10, the information processing terminal 20, and the radio communication apparatus 30 belong in the same subnet. The radio communication apparatus 30 is, for example, a router, but the embodiment is not limited to the router.

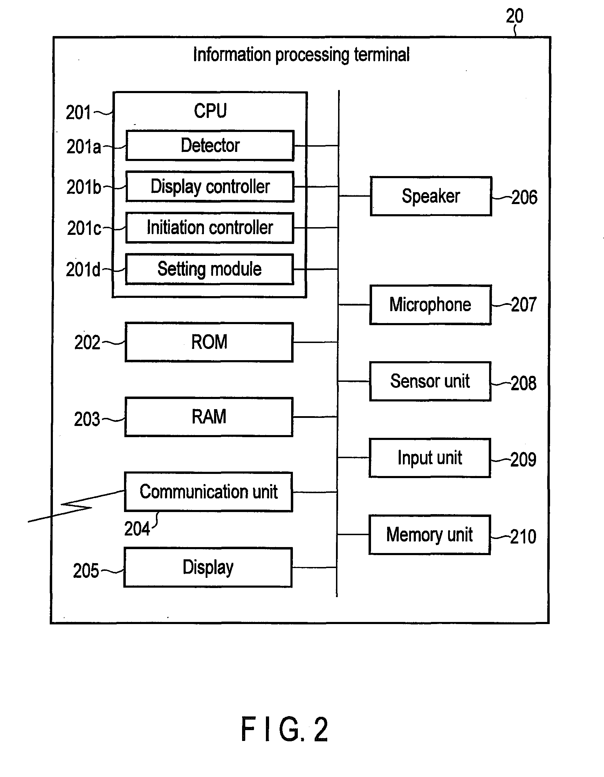

Now, a configuration of the information processing terminal 20 according to the present embodiment will be described. FIG. 2 is a block diagram of the configuration of the information processing terminal. The information processing terminal 20 comprises a CPU (Central Processing Unit) 201, a ROM (Read Only Memory) 202, a RAM (Random Access Memory) 203, a communication unit 204, a display 205, a speaker 206, microphone 207, a sensor unit 208, an input unit 209, and a memory unit 210.

The CPU 201 controls the operation of each unit of the information processing terminal 20. The CPU 201 comprises modules described below. The ROM 202 stores a program for controlling the information processing terminal 20. The RAM 203 functions as a work memory for the CPU 201. The communication unit 204 is an interface for communication with the video display 10 and the radio communication apparatus 30. The display 205 displays various images based on control performed by the CPU 201. The speaker 206 outputs a sound (audio) based on the control performed by the CPU 201.

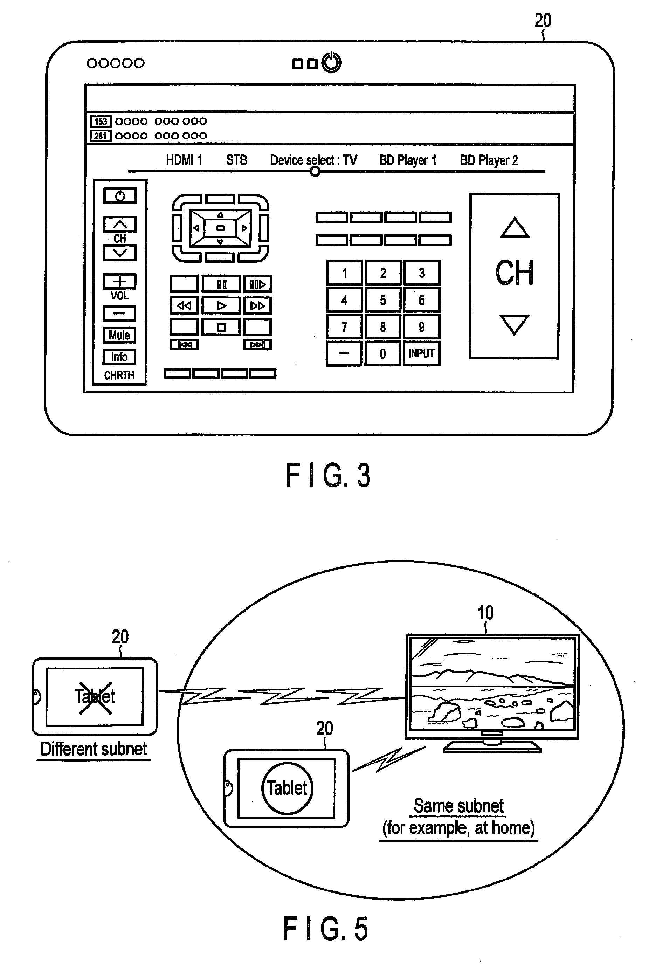

The microphone 207 collects a sound generated outside the information processing terminal 20 to generate a sound signal. The microphone 207 functions as a sound collection module that collects an external sound and a detection module that detects the external sound. The sensor unit 208 includes, for example, a capacitance sensor that senses a user's action. The sensor unit 208 functions as a detection module. The capacitance sensor is, for example, provided integrally with the display 205. The capacitance sensor supplies the CPU 201 with an operation signal generated on the display 205 based on the user's operation. The operation input unit 209 is, for example, a button key. The operation input unit 209 supplies the CPU 201 with an operation signal generated based on the user's operation. The operation input unit 209 includes a key for switching a power supply state (ON/OFF) of the information processing terminal 20 and a key for determining that the information processing terminal 20 is to be recovered from a sleep state. The memory unit 210 is, for example, a hard disk drive (HDD), a solid state drive (SSD), or a semiconductor memory. The memory unit 210 stores programs, applications, and various data which are executed by the CPU 201. The memory unit 201 stores, for example, a remote control application, an EPG (Electronic Program Guide) application, a program search application, a character input application (hereinafter referred to as a keyboard application), and a sound input application. The remote control application is configured to control (operate) the external device. FIG. 3 shows a screen diagram of an example which is placed on the display 205 of the information processing terminal 20 when the remote control application is initiated. The display 205 displays, for example, a screen with keys arranged therein which are similar to the keys on a remote controller configured to operate the video display 10 (hereinafter referred to as a normal remote controller). The EPG application is configured to display TV listings or program information. The program search application is configured to search for the user's desired application. The keyboard application is configured to facilitate character inputting on the display 205. The sound input application is configured to generate strings based on sound signals which are collected by the microphone 207.

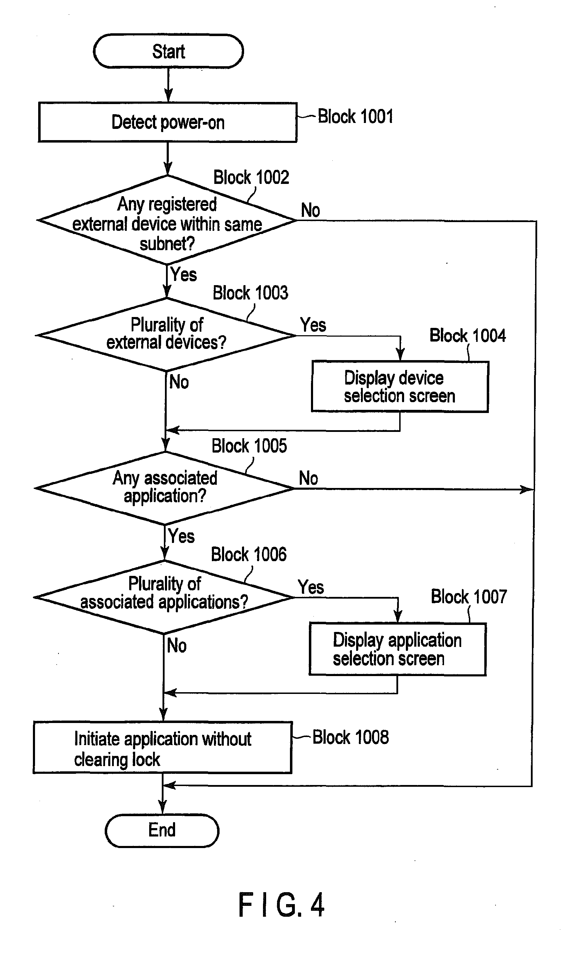

Now, a process of initiating an application at the information processing terminal 20 according to the embodiment will be described. FIG. 4 is a flowchart of the process of initiating an application. The CPU 201 (setting module 201d) desirably presets and preregisters one or more particular external devices selected from at least one or more external devices belonging in the same network as that in which the information processing terminal 20 belongs. For example, the user may preselect at least one particular external device which is a control target (operation target) frequently controlled using the information processing terminal 20. According to the present embodiment, a particular external device set and registered based on the user's selection is referred to as a registered external device.

First, the CPU 201 (detector 201a) detects a trigger provided by the user to initiate an application (Block1001). In Block1001, the CPU 201 detects the trigger provided by the user using any operation other than a selection operation. The selection operation includes an operation of selecting, by the user, an application which is intentionally executed on the information processing terminal 20, for example, an operation of touching or flicking a predetermined application icon on a touch panel (display 205) screen included in the information processing terminal 20. In Block1001, for example, the CPU 201 detects, as a trigger, an input provided by the user's operation to power the information processing terminal 20 on. Then, the CPU 201 determines whether or not any registered external device which belongs in the same subnet is present. If no registered external device which belongs in the same subnet is present (Block 1002, No), the CPU 201 ends the processing without initiating any application. That is, as shown in FIG. 5, if the information processing terminal 20 fails to detect a registered external device which belongs in the same subnet (that is, at home), the CPU 20 does not continue the process of initiating the application. On the other hand, if the information processing terminal 20 detects a registered external device which belongs in the same subnet, the CPU 20 continues the process of initiating the application as described below.

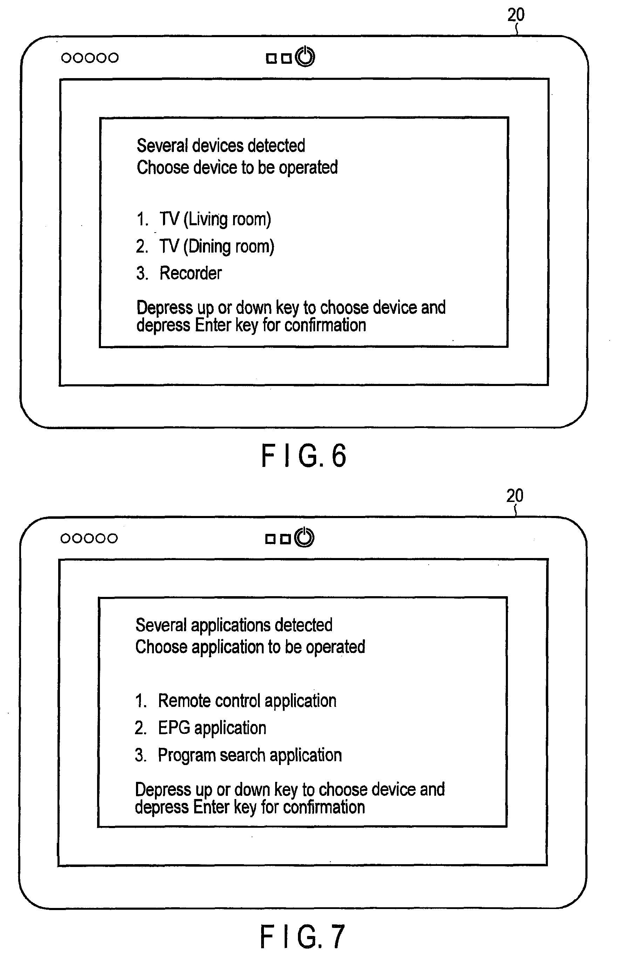

If a registered external device which belongs in the same subnet is present (Block1002, Yes), the CPU 201 determines whether or not a plurality of registered external devices which belongs in the same subnet are present (Block1003, Yes), the CPU 201 (display controller 201b) performs a control operation to allow an apparatus selection screen to be displayed on the display 205 (Block1004). The apparatus selection screen displays a list of a plurality of registered external devices detected by the CPU 201. FIG. 6 is a diagram showing an example of an apparatus selection screen. The user can select, on the apparatus selection screen, a desired registered external device to be controlled (to be operated). Based on the user's selection, the CPU 201 determines whether or not any application associated with the registered external device selected on the apparatus selection screen is present (Block1005). Here, the associated application can be used to operate the selected registered external device, and may be the remote control application by way of example. Besides the remote control application, the associated application may be the EPG application, the program search application, or the keyboard application as described above, but is preferably the remote control application. If the subnet does not include a plurality of registered external devices (that is, only one registered external device belongs in the same subnet) (Yes in Block1003), the CPU201 determines in Block1005 whether or not any application is associated with the only registered external device in the same subnet.

If no associated application is present (Block1005, No), the CPU201 ends the processing without initiating any application. If any associated application is present (Block1005, Yes), the CPU201 determines whether or not a plurality of associated applications are present (Block1006). If a plurality of associated applications are present (Block1006, Yes), the CPU 201 performs a control operation to allow an application selection screen to be shown on the display 205 (Block1007). The application selection screen displays a list of the plurality of associated applications detected by the CPU201 in Block1006. FIG. 7 is a diagram showing an example of an application selection screen displayed on the information processing terminal 20. The application selection screen displays, by way of example, "1. the remote control application", "2. the EPG application", and "3. the program search application". The user can select a desired application on the application selection screen. The CPU 201 (activation controller 201c) initiates the application selected on the application selection screen based on the user's selection without clearing the lock function of the information processing terminal 20 (Block1008). According to the present embodiment, the lock function is a security function which broadly restricts execution of an application by, for example, avoiding accepting the user's spontaneous operation of selecting or initiating an application. If the subnet does not include a plurality of associated applications (that is, only one associated application is present) (Block1006, No), then in Block1008, the CPU 201 initiates the only associated application without clearing the lock function of the information processing terminal 20.

That is, the CPU 201 can initiate an application based on detection of a trigger without clearing the lock function. Consequently, when using the information processing terminal 20 to operate an external device which belongs in the same subnet, the user can omit at least a cumbersome operational procedure of selecting an application and initiating the selected application. Thus, the user can hold and immediately use the information processing terminal as is the case with a normal remote controller.

Besides the above-described aspect, the present embodiment may include an aspect described below.

The trigger which activates the information processing terminal in Block1001 may be other than the power-on of the information processing terminal 20. The CPU 201 may detect, as a trigger, the user's depression of a key which determines recovery of the information processing terminal 20 from a sleep state. Alternatively, the CPU 201 may detect, as a trigger, the user's action sensed by the sensor unit 208 (the action of touching the information processing terminal 20 (not only the display 205 but also any other location such as a rear surface or a side surface of the information processing terminal 20)). Alternatively, if the sensor unit 208 includes a proximity sensor which senses the user's action, the CPU 201 may detect, as a trigger, the user's action sensed by the sensor unit 208 (the action of approaching the information processing terminal 20 (not only the display 205 but also any other location such as the rear surface or side surface of the information processing terminal 20)). Alternatively, if the sensor unit 208 includes an acceleration sensor which senses the user's action, the CPU 201 may detect, as a trigger, the user's action sensed by the sensor unit 208 (the action of coming into contact with (for example, the action of lifting) the information processing terminal 20 (not only the display 205 but also any other location such as the rear surface or side surface of the information processing terminal 20)). The above-described sensors of the sensor unit 208 are illustrative. The sensor unit 208 may include any sensor which senses the user's action. Alternatively, the CPU 201 may detect a sound collected by the microphone 207 as a trigger. In this case, the memory unit 210 stores dictionary data including at least one term corresponding to the registered external device to be operated. This will be described by assuming that the registered external device to be operated is a television. The memory unit 210 stores terms corresponding to the television, as dictionary data. If any term included in a sound collected by the microphone 207 is registered in dictionary data, the sound can be detected as a trigger. The CPU 201 may use the sound collected by the microphone 207 not only as a trigger in Block1001 but also to select a registered external device to be operated in Block1003 or Block1004.

According to the aspect in which the trigger is detected using the sensor unit 208 or the microphone 207 as described above, the user can omit the operation of powering the information processing terminal 20 on when using the information processing terminal 20 to control the external device which belongs in the same subnet. Thus, the user can use the information processing terminal 20 according to a procedure similar to that for a normal remote controller.

In Block1003, even if the CPU 201 determines that a plurality of registered external devices belong in the same subnet, the CPU 201 may omit the processing in Blockl003 in such a case as described below. The CPU 201 may preferentially select the last registered external device selected to be operated as the current registered external device selected to be operated. Alternatively, if the sensor unit 208 includes a sensor which detects the intensities of radio waves generated by the registered external devices, the CPU 201 may preferentially select a registered external device with the highest field intensity as the registered external device to be operated. Such aspects allow the user to omit the cumbersome selection of the registered external device to be operated.

In Block1004, if the CPU 201 determines that a plurality of registered external devices are present one of which may be selected to be operated, the CPU 201 may perform a control operation to show, on the display 205, an apparatus selection screen in which the registered external devices are arranged in order of the field intensity of each of the registered external devices detected by the sensor unit 208. Alternatively, the CPU 201 may perform a control operation to show, on the display 205, an apparatus selection screen in which the registered external devices are arranged in order of the frequency at which the registered external device has previously been selected to be operated. Alternatively, the CPU 201 may perform a control operation to show, on the display 205, an apparatus selection screen in which the last registered external device selected to be operated is preferentially placed (explicitly shown). Such aspects allow the user to easily determine the optimum registered external device according to the radio wave environment of the information processing terminal 20 or the use histories of the registered external devices simply by taking a glance at the apparatus selection screen.

In Block1006, even if a plurality of associated applications are present, the CPU 201 may preferentially select the last application used as the current application to be used and initiate the application. Such an aspect allows the user to omit the cumbersome selection of an application.

In Block1006, even if a plurality of associated applications are present, the CPU 201 may omit the processing in Block1007 by performing a control operation to selectively initiate an application according to the operating status (operating state) of the registered external device to be controlled. For example, if the video display 10 is showing a broadcast program, the CPU 201 may select and initiate the remote control application or the EPG application. For example, if the video display 10 is showing a character input screen, the CPU 201 may select and initiate the keyboard application or the sound input application. The CPU 201 can check the video display 10 for its operating status by transmitting a query signal for the operating status to the video display 10 via the communication unit 204, and receiving and interpreting a reply signal. Such an aspect allows the user to easily use the optimum application according to the operating status of the registered external device to be operated.

In Block1007, the CPU 201 may perform a control operation to show, on the display 205, an application selection screen in which the applications are arranged in order of the frequency at which the application has previously been used. Alternatively, the CPU 201 may perform a control operation to show, on the display 205, an application selection screen in which the last application used is preferentially placed (explicitly shown). Such aspects allow the user to easily determine one of the applications according to their use histories simply by taking a glance at the application selection screen.

In Block1008, since the system does not clear the lock function, the CPU 201 may initiate the application without using personal information. For example, the CPU 201 may provide a setting which disables functions of the application allowing the user to post the user's impression of the program on a website using the information processing terminal 20. Such an aspect allows privacy to be protected because the original owner of the information processing terminal 20 can prevent any person other than the owner from performing an operation regarding the personal information.

Even while the user is using the application initiated by the above-described processing, the CPU 201 may permit a normal state (a telephone function or any other function) to be recovered based on a predetermined operation. Even when another function (for example, the telephone function) interrupts while the user is using the application initiated by the above-described processing, the CPU 201 may return to the state established at the time of the initiation of the application when the interruption function terminates. Even if the user controls a particular registered external device using the application initiated by the above-described processing, the CPU 201 may switch the registered external device to be operated to another registered external device based on a predetermined operation. Even while the user is using the application initiated by the above-described processing, the CPU 201 may initiate another application to switch the current application utilized, based on a predetermined operation.

Even if no external devices are set or registered in the information processing terminal 20, the CPU 201 may carry out processing as described above by considering all the plurality of external devices belonging in the same network as that in which the information processing terminal 20 belongs to be registered external devices.

## Claims

1. An information processing terminal **characterized by** comprising:
a memory (210) configured to store an application for controlling an external device;
a detector (201a) configured to detect a trigger by a user to initiate the application; and
an initiation controller (201c) configured to initiate the application based on the trigger without clearing a lock function.

2. The terminal of Claim 1, **characterized by** further comprising a setting module (201d) configured to set and register a first external device selected from a plurality of external devices and belonging to the same network as the information processing terminal (20),
**characterized in that** when the information processing terminal (20) detects the first external device, the initiation controller (201c) is further configured to initiate a first application associated with the first external device.

3. The terminal of Claim 1, **characterized in that** the trigger comprises an input to power the information processing terminal (20).

4. The terminal of Claim 1, **characterized in that** the detector (201a) comprises a sensor configured to sense a user action, and the trigger comprises the user action sensed by the sensor.

5. The terminal of Claim 1, **characterized in that** the detector (201a) comprises a sound collection module, and the trigger comprises a sound collected by the sound collection module.

6. The terminal of Claim 1, **characterized in that** the application comprises a remote control application for operating the external device.

7. The terminal of Claim 2, **characterized by** further comprising a display controller (201b) configured to control display of a list of the plurality of external devices on a screen when the plurality of external devices belong to the same network.

8. The terminal of Claim 7, **characterized in that** the display controller (201b) is further configured to control display of the list of the plurality of external devices in order of an intensity of a radio wave from each of the plurality of external devices detected by the information processing terminal.

9. The terminal of Claim 1, **characterized by** further comprising a display controller (201b) configured to control display of a list of a plurality of applications on a screen when the plurality of applications associated with the external device are present,
**characterized in that** the initiation controller (201c) is further configured to initiate a first application selected on the screen.

10. The terminal of Claim 1, **characterized in that** the initiation controller (201c) is further configured to initiate the application according to an operating status of the external device.

11. An information processing method **characterized by** comprising:
detecting a trigger by a user to initiate an application for controlling an external device; and
initiating the application based on the trigger without clearing a lock function.
